# EUROPÄISCHE PATENTSCHRIFT

(11) **EP 1 808 335 B1**
(45) Veröffentlichungstag und Bekanntmachung des Hinweises auf die Patenterteilung: **15.10.2008**
(21) Anmeldenummer: 06022710.5
(22) Anmeldetag: 31.10.2006
(51) Int. Cl.: B60R 3/00

(54) **Geländeranordnung**
Railing arrangement
Arrangement de garde-corps

(30) Priorität: 12.01.2006 DE 202006000455 U
(43) Veröffentlichungstag der Anmeldung: 18.07.2007
(73) Patentinhaber: WEW Westerwälder Eisenwerk GmbH, 57586 Weitefeld (DE)
(72) Erfinder: Pfau, Dieter, 57578 Elkenroth (DE); Schmidt, Thomas, 57520 Niederdreisbach (DE)
(74) Vertreter: Samson & Partner

(56) Entgegenhaltungen:
- EP-A- 0 470 005
- DE-U1- 20 306 651
- GB-A- 926 289
- US-A- 5 749 436
- US-A- 5 921 531

## Beschreibung

Die vorliegende Erfindung betrifft eine Geländereinrichtung für eine Transporteinheit, insbesondere für einen Tankcontainer. Sie dient zum Sichern eines Arbeitsbereichs der Transporteinheit, der üblicherweise auf deren Oberseite angeordnet ist. In diesem Arbeitsbereich sind oft Öffnungen und Armaturen angeordnet. Insbesondere bei Tankcontainern befinden sich an deren Oberseite die sogenannten Scheitelarmaturen (z.B. Mannloch, Füll-/Entleeranschlüsse, Druckanschlüsse, Sicherheitsventile, Steigrohranschlüsse oder ähnliches). Um in diesem Arbeitsbereich tätige Personen zu schützen, sind dort eine oder mehrere Geländereinrichtungen vorgesehen, die diesen Arbeitsbereich sichern. Bei Tankwagen und Tankcontainern haben sich sogenannte Klappgeländer durchgesetzt, die in der Regel ein oder mehrere klappere Seitenelemente aufweisen, die zwischen einer eingeklappten Stellung und einer ausgeklappten Stellung hin und her bewegbar sind und in der ausgeklappten Stellung einen Geländerabschnitt bilden, welcher an einer Seite des zu sichernden Arbeitsbereiches verläuft. Die Erfindung betrifft auch eine Geländeranordnung, die aus mehreren Geländereinrichtungen gebildet ist.

Zum Transport werden diese Klappgeländer eingeklappt oder eingefaltet, um bei Tankwagen die Gesamthöhe zu reduzieren, und bei Tankcontainern die Geländer innerhalb der durch die Außenseiten der Eckbeschläge definierten Außenkontur anzuordnen, damit die Tankcontainer beim Umschlag auch übereinander gestapelt werden können und Umschlaggeräte, wie Containerspreader, die Geländer nicht beschädigen. Ein herkömmliches Klappgeländer ist beispielsweise aus der DE 33 20 969 A1 bekannt.

Um auf solchen Transporteinheiten gefahrlos arbeiten zu können, sind aufsetzbare oder einsteckbare Geländeranordnungen vorgesehen. Solche Geländeranordnungen müssen entweder an Füll- oder Wartungsstationen vorgehalten werden und dann einzeln zur Sicherung des Arbeitsbereiches angebaut werden, oder es muß ein vollständiger, den Arbeitsbereich umgebender Geländerrahmen an der Station vorhanden sein, der von oben auf den Arbeitsbereich absenkbar ist. Solche Rahmen passen jedoch nicht immer genau zum vorhandenen Arbeitsbereich und sind zudem aufwendig und teuer.

Herkömmliche, insbesondere parallelogrammartig zusammenlegbare Klappgeländer decken nur einen Abschnitt an einer Seite des Arbeitsbereiches ab, da sie zum Zusammenfalten einen bestimmten Raumbedarf in Längsrichtung entlang der Seite des Arbeitsbereiches erfordern, damit sie beim Zusammenfalten vollständig innerhalb der Außenkontur eines Containers bzw. Tankcontainers oder einer anderen Transporteinheit (Tankwagen, Tankauflieger, Eisenbahnkesselwagen) angeordnet werden können. Dieser Zusatzraum bleibt bei aufgestelltem Geländer ungesichert. Solche Klappgeländer sind z.B. aus der gattungsbildenden GB 926 989 A und dem US-Patent Nr. 5,749,436 bekannt.

Die Aufgabe der vorliegenden Erfindung besteht darin, eine verbesserte Geländereinrichtung bereitzustellen, die zumindest eine Seite des Arbeitsbereiches vollständig absichern kann. Eine weitere Aufgabe kann darin gesehen werden, eine klappbare Geländeranordnung auszubilden, mit der ein, insbesondere rechteckiger, Arbeitsbereich rundum absicherbar ist.

Diese Aufgabe wird durch eine Geländereinrichtung gemäß dem Anspruch 1 der vorliegenden Erfindung gelöst. Hier ist ein klappbares Seitenteil vorgesehen, welches mit einem klappbaren Zusatzelement versehen ist. Dieses ist bei ausgeklapptem Seitenteil in eine Stellung klappbar, in der es einen zusätzlichen Geländerabschnitt an der durch das klappbare Seitenteil bereits gesicherten Seite des Arbeitsbereiches bildet.

Dieses Zusatzelement erlaubt es auf einfache Weise den gesicherten Arbeitsbereich zu erweitern und insbesondere bei einem Seitenteil das parallelogrammartig zusammenlegbar ist, die durch das Zusammenfalten erforderliche Lücke an einer Seite des Arbeitsbereiches vollständig zu schließen, so daß diese Seite komplett abgesichert ist. Dazu ist das klappbare Zusatzelement an einem Ende des klappbaren Seitenteils angeordnet.

Ein solches Zusatzelement ist aber auch für ein klappbares Seitenteil vorteilhaft, welches bügelförmig ausgebildet ist und herausziehbar oder umklappbar angeordnet ist. So ist z.B. an Tankcontainern oder auch an Tankwagen meist an einer Stirnseite eine Leiter vorgesehen, über die der Arbeitsbereich zugänglich gemacht wird. So kann eine Person die Leiter zum Teil besteigen, das bügelförmige Seitenteil, welches nahe am Aufstiegsbereich angeordnet ist, aufstellen und ggf. sicheren, und dann den so bereits teilweise gesicherten Arbeitsbereich betreten und das Zusatzelement ausklappen, um auch den Aufstiegsbereich selbst zu sichern.

Gemäß Anspruch 2 weist das klappbare Seitenteil an einem Ende ein weiteres Zusatzelement auf, welches bei ausgeklapptem oder aufgestelltem Seitenteil einen Geländerabschnitt an einer weiteren Seite des Arbeitsbereiches bildet. Dieses Zusatzelement verläuft in der Regel rechtwinkelig zum Seitenteil. Auf diese Weise können mit einem klappbaren Seitenteil und entsprechenden Zusatzelementen zwei Seiten des Arbeitsbereiches, zumindest teilweise, abgesichert werden.

Gemäß Anspruch 3 kann dieses zweite Zusatzelement auch klappbar ausgeführt werden, so daß es in eingeklappter Stellung parallel zu der durch das klappbare Seitenteil definierten Ebene angeordnet werden kann. Eine solche Anordnung erleichtert es, das Seitenteil in einer geklappten Stellung innerhalb einer gegebenen Außenkontur anzuordnen.

Die Ansprüche 4 und 5 betreffen Geländereinrichtungen mit unterschiedlichen Ausführungen des klappbaren Seitenteils, welches nach Anspruch 4 bügelförmig ausgebildet ist und in bzw. auf die vom Arbeitsbereich definierte Ebene klappbar ausgebildet ist. So eine Ausführung ist besonders einfach und robust herstellbar und auch für kurze Geländerabschnitte geeignet. Gemäß Anspruch 5 ist ein faltbares Seitenteil vorgesehen, welches so ausgeführt ist, daß ein waagerecht verlaufendes Geländerelement gelenkig mit mehreren Stützelementen verbunden ist, welche in Richtung des Geländerelementes umklappbar bzw. schwenkbar am Arbeitsbereich angeordnet sind. Das Seitenteil wird dabei durch eine axiale und parallele Verschiebung des Geländerelementes und durch Verschwenken der Stützelemente zusammengelegt, wobei die Stützelemente in eingeklappter bzw. eingefalteter Stellung mehr oder weniger parallel zum Geländerelement verlaufen. In ausgeklappter bzw. aufgestellter Stellung stehen Stützelement und Geländerelement im wesentlichen senkrecht zueinander und bilden eine gemeinsame Geländerebene. Diese Ausführung hat sich bei längeren zu sichernden Seitenabschnitten eines Arbeitsbereiches bewährt.

Die Ansprüche 6-9 betreffen Geländeranordnungen, bei denen mehrere Geländereinrichtungen vorgesehen sind, um die mehreren Seiten des Arbeitsbereiches abzusichern und ggf. eine Rundumsicherung zu gewährleisten. Gemäß Anspruch 7 sind die Geländereinrichtungen untereinander koppelbar und ergeben so eine besonders stabile Geländeranordnung.

In der Weiterbildung gemäß Anspruch 8 ist die Geländereinrichtung und/oder das Zusatzelement jeweils mit einer Sicherung versehen, welche das Seitenteil, das Zusatzelement oder beide jeweils in ihrer eingeklappten oder ausgeklappten Stellung lösbar fixiert. So wird verhindert, daß sich die Geländerkomponenten beim Transport versehentlich aufstellen, beispielsweise durch an der Transporteinheit entlang streifende Äste oder durch Windeinwirkung. Und es wird verhindert, daß die Geländerelemente ungewollt bei Tätigkeiten im Arbeitsbereich eingeklappt bzw. eingefaltet werden und so, möglicherweise sogar unbemerkt, Seiten des Arbeitsbereichs ungesichert sind. Anspruch 9 betrifft Ausführungen solcher Sicherungen.

Die Ansprüche 10 und 11 betreffen Transportgeräte mit entsprechenden Geländereinrichtungen bzw. Geländeranordnungen, wobei das Transportgerät gemäß Anspruch 11 als Tankcontainer ausgebildet ist.

Die vorliegende Erfindung wird nun anhand von Ausführungsbeispielen näher erläutert, die in den Zeichnungen schematisch dargestellt sind. Dabei zeigt:
- Fig. 1: die Seitenansicht einer Geländeranordnung am Arbeitsbereich eines Tankcontainers,
- Fig. 2: eine Draufsicht auf den Arbeitsbereich mit der Geländeranordnung aus Figur 1,
- Fig. 3: einen Teilschnitt A-A durch den Arbeitsbereich, der die Befestigung eines Seitenteils aus Figur 1 und 2 an einem den Arbeitsbereich bildenden Laufsteg illustriert,
- Fig. 4: eine Seitenansicht des in Fig. 3 dargestellten Bereiches,
- Fig. 5: eine Sicherungseinrichtung, die das Seitenteil arretiert,
- Fig. 6: einen Scharnierbereich am Ende des in Fig. 1 dargestellten Seitenteils, über welches das klappbare Zusatzelement mit dem Seitenteil verbunden ist,
- Fig. 7: die Verbindung zweier Geländereinrichtungen, die verschiedenen Seiten des Arbeitsbereiches angeordnet sind,
- Fig. 8: eine Klappkulisse für ein bügelförmiges Seitenteil, welches in Fig. 1 und 2 dargestellt ist,
- Fig. 9: eine Seilanordnung für ein faltbares Seitenteil, welches den Arbeitsbereich zusätzlich sichert,
- Fig. 10: die Seitenansicht einer anderen Geländeranordnung am Arbeitsbereich eines anderen Tankcontainers,
- Fig. 11: eine Draufsicht auf den Arbeitsbereich mit der Geländeranordnung aus Fig. 10,
- Fig. 12: einen Teilschnitt entlang der in Fig. 10 angegebenen Schnittebene A-A, mit einer Ansicht einer bügelförmigen Geländereinrichtung bei aufgestelltem Seitenelement, und
- Fig. 13: die Darstellung eines verstellbaren Sicherungszapfens zur Verriegelung der Seitenelemente bzw. der Zusatzelemente.

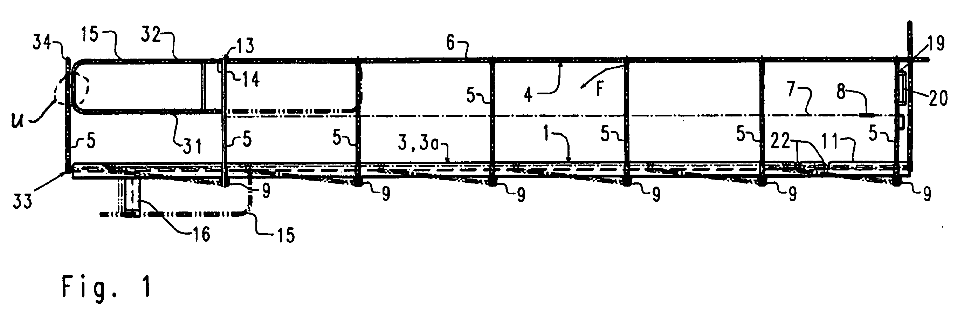

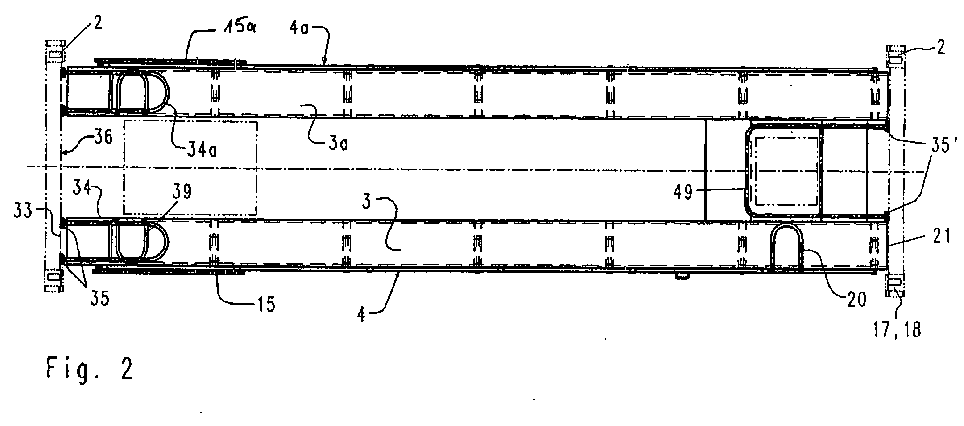

In den Figuren sind Ausführungsbeispiele der vorliegenden Erfindung dargestellt. Dabei zeigt die Fig. 1 die Seitenansicht eines Arbeitsbereichs 1 auf der Oberseite eines Tankcontainers 2 (strichpunktiert angedeutet in Fig. 2). Der Arbeitsbereich 1 wird dabei von sog. Laufstegen 3, 3a gebildet, die z.B. aus metallischen Gitterrostelementen hergestellt sind.

Ein Ausführungsbeispiel einer erfindungsgemäßen Geländereinrichtung 4 zeigt die Fig. 1 in aufgestelltem Zustand. Die eingeklappte bzw. zusammengelegte Stellung der Geländereinrichtung 4 ist strichpunktiert dargestellt. Die Geländereinrichtung 4 weist mehrere klappbare Stützen 5 auf, deren obere Enden mit einem als Handlauf ausgebildeten, oberen Geländerelement 6 gelenkig miteinander verbunden sind. In ausgeklappter Stellung verlaufen die Stützen 5 und das Geländerelement 6 etwa senkrecht zueinander.

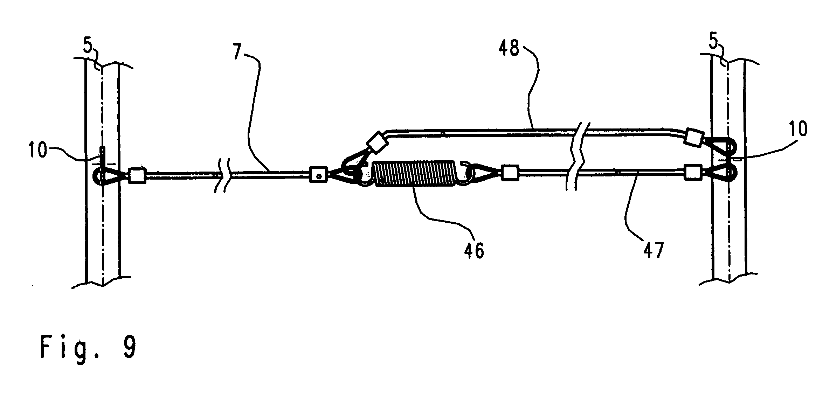

Etwa in Kniehöhe verläuft ein federgespanntes Seil 7, das durch einen Federmechanismus 8 gespannt gehalten wird und so eine zusätzliche Sicherung bildet. Der Federmechanismus 8 wird weiter unten im Zusammenhang mit der Fig. 9 näher erläutert.

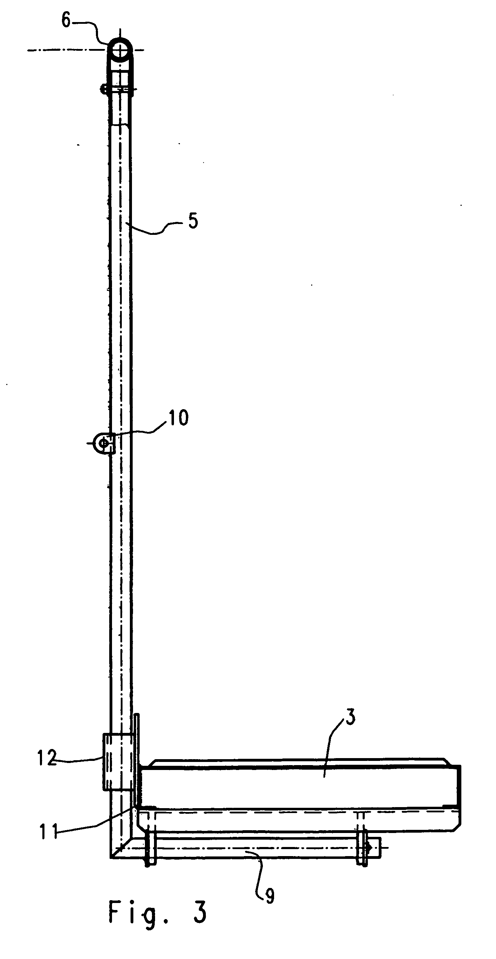

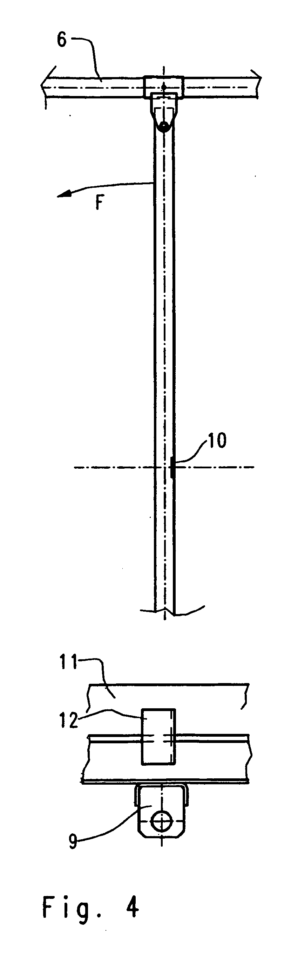

Jede Seitenstütze 5 ist über ein am unteren Ende angebrachtes Scharnierstück 9 an der Unterseite des Laufstegs 3 schwenkbar befestigt (siehe Fig. 3). In Kniehöhe jeder Seitenstütze 5 ist eine Öse 10 angebracht, die das Seil 7 aufnimmt. Die zur Außenseite des Tankcontainers 2 weisende Außenwange 11 des Laufstegs 3 ist nach oben verlängert und dient so auch als Fußanschlag. An der Außenwange 11 ist ein U-förmiger Anschlag 12 angebracht, welcher den Schwenkbereich der Seitenstützen 5 beschränkt und so angebracht ist, daß diese in senkrechter Stellung im Anschlag 12 anschlagen. Gleichzeitig stabilisieren die Anschläge 12 die Seitenstütze 5 gegen Belastungen nach außen. Zum Zusammenlegen der Geländereinrichtung 4 werden die Seitenstützen 5 in Richtung des Pfeils F (Fig. 1, Fig. 4) verschwenkt und gemeinsam mit dem Geländerelement 6 im Bereich der Außenwange 11 zusammengelegt (siehe strichpunktierte Darstellung in Fig. 1). Das Geländerelement 6 liegt dabei auf der Oberseite der Anschläge 12. In dieser Stellung verlaufen das Geländerelement 6 und die Stützen 5 mehr oder weniger parallel und liegen bündelförmig platzsparend aneinander. Der Ausdruck "parallel" soll im Zusammenhang mit der vorliegenden Erfindung einen Winkelbereich von 0-20° kennzeichnen, den die Stützen 5 und das Geländerelement 6 zueinander einnehmen, wenn sie zusammengelegt neben dem Laufsteg 3 angeordnet sind. Die Bezeichnung "senkrecht" soll hier einen Winkelbereich von 75-90° kennzeichnen, der zwischen den Stützen 5 und dem Geländerelement 6 in ausgeklappter Stellung gebildet wird.

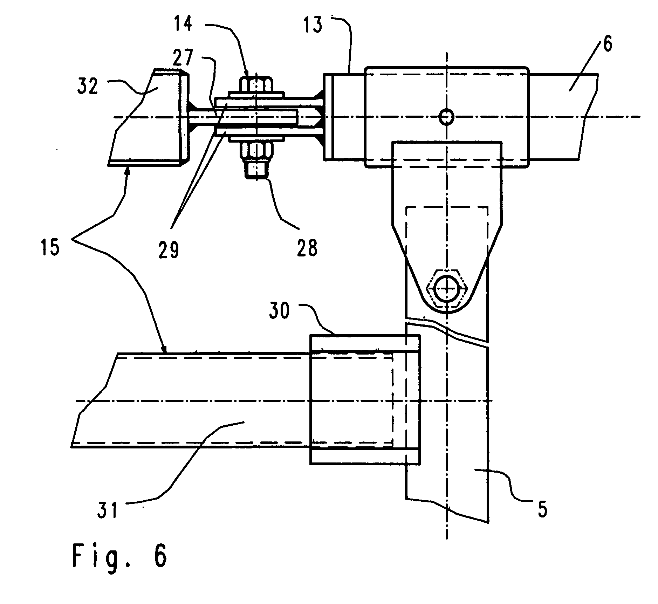

An einem Ende 13 der Geländereinrichtung 4 ist über einen Scharniermechanismus 14, der weiter unten im Zusammenhang mit Fig. 6 genauer beschrieben wird, ein bügelförmiges Zusatzelement 15 an der Geländereinrichtung 4 angebracht. Das Zusatzelement 15 ist klappbar ausgebildet und sichert in ausgeklappter Stellung den Abschnitt an der Seite des Arbeitsbereiches, der zum Einklappen der Geländereinrichtung 4 erforderlich ist. Das Zusatzelement 15 kann dabei zwischen der in Fig. 1 gezeigten Stellung und der eingeklappten Stellung (strichpunktiert in Fig. 1 und ebenfalls in Fig. 2 in der Draufsicht dargestellt) hin und her bewegt werden. Zum Zusammenlegen der Geländereinrichtung 4 wird das Zusatzelement 15, das in ausgeklappter Stellung in Verlängerung des Geländerelements 6 verläuft, in die eingeklappte Stellung am Geländerelement 6 anliegend gebracht. Die Geländereinrichtung 4 kann dann zusammen mit dem Zusatzelement 15 eingeklappt werden (strichpunktierte Darstellung in Fig. 1, Draufsicht in Fig. 2). Dabei ist an der Außenwange 11 des Laufstegs 3 eine Aufnahme 16 vorgesehen, die bei eingeklappter Geländereinrichtung 4 das Zusatzelement 15 in eingeklappter Stellung sichert.

Die oben beschriebene Darstellung erlaubt es, die Längsseite eines Arbeitsbereichs 1, der sich über die gesamte Länge eines Tankcontainers 2 erstreckt, mit einer Geländereinrichtung 4 vollständig abzudecken, wobei die Geländereinrichtung 4 auch in zusammengelegtem Zustand vollständig innerhalb der durch die Außenseite der Eckbeschläge 17 bzw. der Eckstützen 18 definierten Außenkontur des Tankcontainers anzuordnen ist. Dabei sind Laufsteg 3 und die daran angebrachten Teile 11, 12 für die Geländereinrichtung 4 so angeordnet, daß diese im zusammengelegtem Zustand auch nicht nach oben aus der Tankcontainerkontur herausragt.

Am anderen Ende 19 der Geländereinrichtung 4 ist an der Seitenstütze 5 ein weiteres Zusatzelement 20 angebracht. Dieses Zusatzelement 20 ist bügelförmig ausgebildet und sichert in ausgeklappter Stellung der Geländeranordnung 4 ein stirnseitiges Ende 21 des Laufstegs 3. In eingeklappter Stellung liegt das Zusatzelement 20 im wesentlichen auf der Oberseite des Laufstegs 3 auf. Zusätzlich sind in der Außenwange 11 des Laufstegs 3 Ausnehmungen 22 vorgesehen, die sicherstellen, daß das Zusatzelement 20 in zusammengeklapptem Zustand der Geländereinrichtung 4 nicht aus der oberen Außenkontur des Tankcontainers 2 heraussteht. Das Zusatzelement 20 ist in Fig. 1 und 2 als rechtwinkelig zum Geländerelement 6 ausgebildeter Bügel gezeigt, der an einer Seitenstütze 5 angebracht ist. In einer anderen (nicht gezeigten) Ausführungsform ist das Zusatzelement 20 klappbar ausgebildet und kann zwischen der dargestellten Stellung und einer parallel zum Geländerelement 6 verlaufenden Stellung hin und her geklappt werden. Bei dieser Ausführung ist es dann wie das Zusatzelement 15 am Geländerelement 6 schwenkbar fixiert.

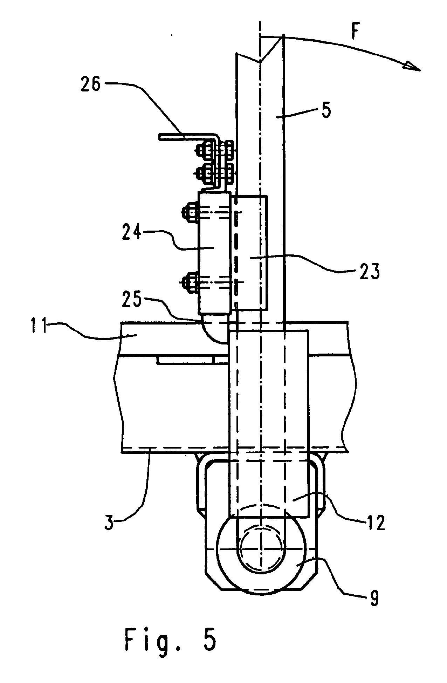

Fig. 5 zeigt die Sicherung der Geländereinrichtung 4 in ihrer ausgeklappten Stellung. Dazu ist an einer Stütze 5 über eine Halterung 23 ein Schnappschloß 24 befestigt. Das Schnappschloß 24 weist einen Riegel 25 auf, der beim Aufstellen der Geländereinrichtung 4 hinter dem U-förmigen Anschlag 12 einschnappt und die Seitenstützen 5, die über das Geländerelement 6 miteinander gekoppelt sind, in aufgestellter Stellung fixiert. Am Schnappschloß 24 ist eine Handhabe 26 angebracht, die bei entsprechender Betätigung den Riegel 25 zurückzieht und so die Geländereinrichtung 4 zum Zusammenlegen freigibt.

Die Fixierung in zusammengelegter Stellung erfolgt zum einen durch die Schwerkraft und die nach unten wirkenden Massen der Geländereinrichtung 4. Zusätzliche Sicherungen können in Form von Verriegelungsknebeln (nicht dargestellt) oder anderen geeigneten Verriegelungselementen vorgesehen werden.

Fig. 6 zeigt eine Detaildarstellung des Scharniermechanismus 14 am Ende 13 des Geländerelements 6, an dem das bügelförmige Zusatzelement 15 angebracht ist. An einem Ende des Zusatzelements 15 ist dazu eine Scharnierplatte 27 befestigt, die über eine entsprechende Öffnung und eine Scharnierschraube 28 zwischen zwei Scharnierplatten 29, welche am Ende 13 des Geländerelements 6 angebracht sind, schwenkbar mit diesem verbunden ist. Die Scharnierplatte 27 und die Scharnierplatten 29 sind dabei so ausgebildet, daß das obere Bügelrohr 32 des Zusatzelements 15 in ausgeklapptem Zustand in Verlängerung des Geländerelements 6 verläuft. Diese Stellung wird durch einen an der Seitenstütze 5 angebrachten Anschlag 30 definiert, in den das Ende des unteren Bügelrohrs 31 in ausgeklappter Stellung des Zusatzelements 15 einfällt. Der Anschlag 30 hält das Zusatzelement 15 in ausgeklappter Stellung fluchtend mit dem Geländerelement 6.

Fig. 1 und 2 zeigen am Stirnende 33 des Laufstegs 3 eine weitere Geländereinrichtung 34, die bügelförmig ausgebildet ist und mit den unteren Enden der Seitenrohre schwenkbar in entsprechenden Aufnahmen 35 am Stirnrahmen 36 befestigt ist. Fig. 2 zeigt die Geländeranordnung 34 in eingeklappter (auf dem Laufsteg 3) Stellung und Fig. 1 zeigt die Geländeranordnung 34 in ausgeklappter bzw. aufgestellter Stellung.

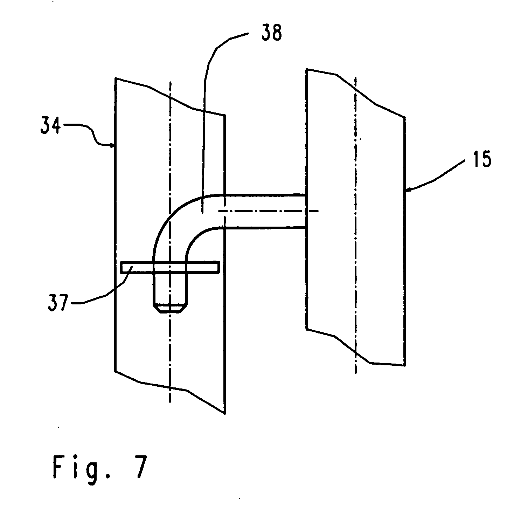

Fig. 7 zeigt den in Fig. 1 markierten Bereich U, in dem ein Koppelmechanismus zwischen der Geländereinrichtung 34 und dem Zusatzelement 15 dargestellt ist. Die Kopplung erfolgt über eine Öse 37, in die ein entsprechender Haken 38 eingehängt wird. Diese Kopplung arretiert Zusatzelement 15 und Geländereinrichtung 34 aneinander. Damit werden auch die Geländereinrichtung 4 und die Geländereinrichtung 34 aneinander stabilisiert.

Die klappbare Geländereinrichtung 34 weist ein weiteres klappbares Zusatzelement 39 auf (siehe Fig. 2), das bei aufgestellten Seitenelement 34 ebenfalls abgeklappt werden kann und einen erweiternden Geländerabschnitt an dem entsprechenden Stirnseitenbereich bilden kann.

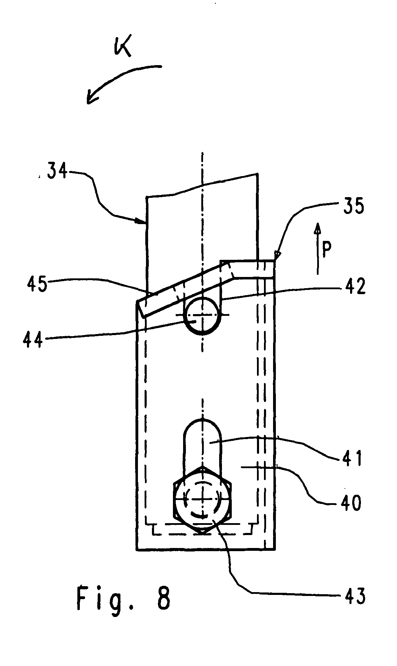

Fig. 8 zeigt die als Klappkulisse ausgebildete Aufnahme 35, die einen in Klapprichtung offenen, U-förmigen Schuh umfaßt, dessen Seitenflansche 40 jeweils ein Langloch 41 und eine Falle 42 aufweisen. Im Schuh ist jeweils das untere Ende des Seitenrohres der Geländereinrichtung 34 angeordnet, das im Bereich des Langlochs 41 und der Falle 42 jeweils von einem Querelement 43 bzw. 44 durchsetzt ist, wobei das Querelement 43 als Schraube ausgebildet ist und das Querelement 44 als Querbolzen. Fig. 8 zeigt das untere Ende der Geländereinrichtung 34 in aufgestellter Position, in der es vom Schuh 40 fixiert wird, indem das Querelement 44 in der Falle 42 verrastet ist und ein Schwenken um die Achse des Querelements 43 verhindert wird. Zum Einklappen (Umlegen) der Geländereinrichtung 34 wird dieses in Pfeilrichtung P nach oben gezogen, dabei gelangt das Querelement 44 aus der Falle 42 und das Seitenrohr 39 kann um die durch das Querelement 43 gebildete Schwenkachse aus dem Schuh 40 herausgeklappt werden (Pfeil K). Die offene Seite des Schuhs 40 weist im dargestellten Ausführungsbeispiel (siehe Fig. 2) zum Laufsteg 3, so daß die Geländereinrichtung 34 auf den Laufsteg 3 geklappt werden kann. Zum Ausklappen (Aufstellen) der Geländereinrichtung 34 wird dieses um das Querelement 43 nach oben bzw. in den Schuh 40 hereingeklappt. Dabei gelangt das Querelement 44 auf die abgeschrägte Führungsrampe 45. Beim Fortsetzen der Klappbewegung führt die Führungsrampe 45 das Seitenelement 34 bzw. das Querelement 43 im Langloch 41 nach oben, bis das Querelement 44 am Ende der Führungsrampe in die Falle 42 einfällt. In dieser Stellung ist das Seitenelement 34 aufgestellt und gegen Umklappen gesichert.

Fig. 9 zeigt den Mechanismus, mit dem das Seil 7 an der Geländereinrichtung 4 unter Spannung gehalten wird. Das Seil 7 wird dabei an seinen Enden jeweils an den End-Seitenstützen 5 gehalten und durch entsprechende Ösen 10 gehalten und an den dazwischen angeordneten Seitenstützen 5 geführt. An einem Ende ist eine Spannfeder 46 zwischen dem Seil 7 und einem Endstück 47 vorgesehen. Die Länge des Seils 7, der Spannfeder 46 und des Endstücks 47 sind so bemessen, daß das Seil unter Spannung gehalten wird und eine stabile zusätzliche Sicherung im Kniebereich bietet. Die Feder 46 nimmt dabei auch Längenänderungen auf, die beim Zusammenlegen der Geländeranordnung 4 auftreten können. Ein Überbrückungsseilstück 48 verhindert, daß bei sehr hohen auf das Seil 7 wirkenden Lasten die Feder 46 überdehnt wird. Dabei ist die Länge des Überbrückungsseilstücks 48 so gemessen, daß eine gewisse elastische Dehnung der Feder 46 zugelassen wird, und dann das Überbrückungsseilstück 48 einen Anschlag bildet, der eine Überdehnung der Feder 46 verhindert. Dazu ist ein Ende des Überbrückungsseilstücks 48 direkt am Ende des Seils 7 befestigt und verläuft von dort unter Überbrückung der Feder 46 zur Öse 10 in der Seitenstütze 5, an der das andere Ende befestigt ist.

Fig. 2 zeigt neben der Geländereinrichtung 4 und der zusätzlichen Geländereinrichtung 34 eine weitere Geländereinrichtung 4a, welche bis auf das Zusatzelement 20 der Geländereinrichtung 4 entspricht. Weiterhin ist eine der Geländereinrichtung 34 entsprechende Geländereinrichtung 34a vorgesehen. Geländereinrichtung 4a und 34a sichern dabei die Seiten des Laufstegs 3a. Am Stirnende 21 ist ein weiterer Sicherungsbügel 49 vorgesehen, der in den Aufnahmen 35 entsprechenden Aufnahmen 35' klapp- bzw. schwenkbar aufgenommen wird.

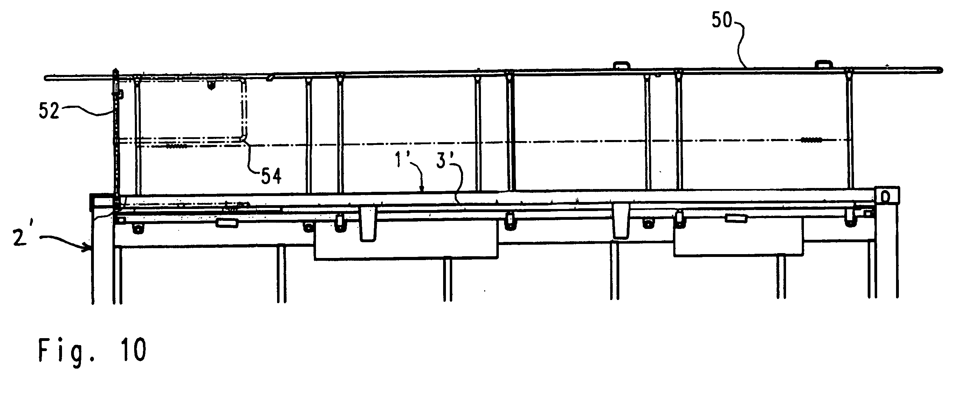

Die Fig. 10, 11 und 12 zeigen weitere Ausführungsbeispiele der vorliegenden Erfindung. Die Fig. 10 zeigt dabei (teilweise einander verdeckend) zwei Klappgeländer 50, die in ausgeklappter Stellung jeweils einen Längsseitenbereich eines Arbeitsbereich 1' an einem Tankcontainer 2' absichern, der von mehreren Laufstegen 3' gebildet wird. Der Mechanismus des Klappgeländers 50 entspricht dabei weitgehend dem der vorgehend beschriebenen Geländereinrichtung 4 (4a). Zusätzlich ist am Stirnende eine Geländereinrichtung 52 vorgesehen, die mit zwei klappbaren Zusatzelementen 53 und 54 versehen ist. In ausgeklappter bzw. aufgestellter Stellung der bügelförmig ausgebildeten Geländereinrichtung 52 ist das Zusatzelement 54 rechtwinkelig zu diesem abklappbar, so daß es einen Geländerabschnitt zur Sicherung des vom aufgestellten Klappgeländer 50 freigelassenen Seitenbereiches bildet. Diese Stellung ist in Fig. 10 durch das strichpunktiert dargestellte Zusatzelement 54 illustriert.

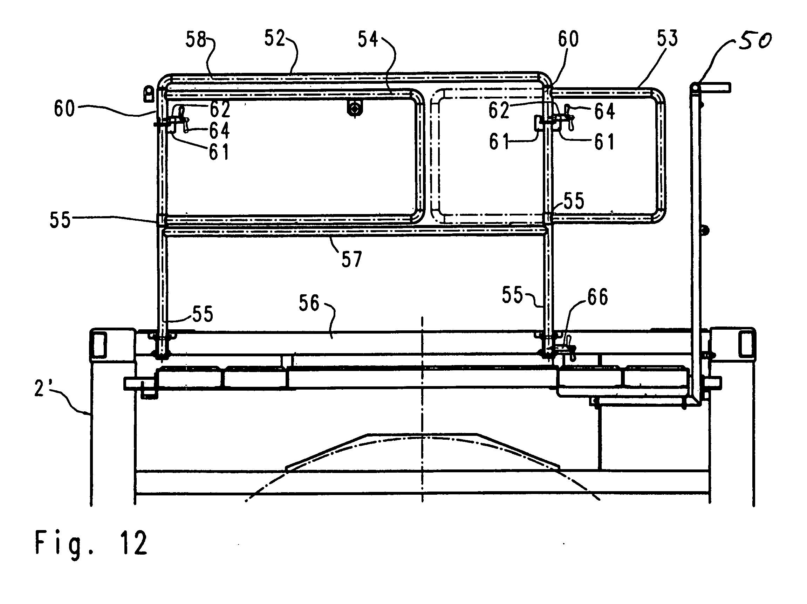

Fig. 12 zeigt das Zusatzelement 53, das in ausgeklappter Stellung einen zusätzlichen Geländerabschnitt am Stirnende 51 bildet und dort die Lücke zwischen dem anderen Klappgeländer 50 und der Geländereinrichtung 52 schließt. Die bügelförmige Geländereinrichtung 52 ist dabei mit seinen unteren Enden 55 in am oberen Querholm 56 des Tankcontainers 2' angebrachte Aufnahme schwenkbar fixiert. Zwischen einer etwa in Kniehöhe verlaufenden Querstange 57 und dem oberen Geländerelement 58 sind jeweils an den senkrecht verlaufenden Stützen die Zusatzelemente 53 und 54 über die Stützen 58 umfassende Hülsen 59 und 60 schwenkbar gehalten. Den Schwenkbereich legen dabei an den Stützen 58 entsprechend angebrachte Anschlaglaschen 61 fest.

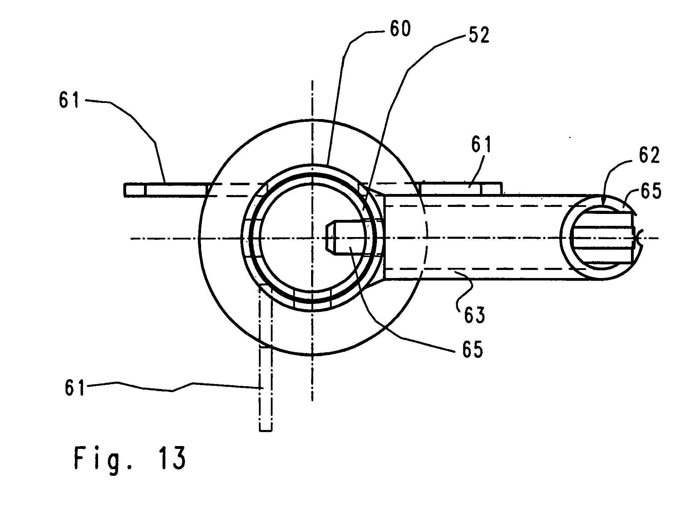

Fig. 13 zeigt im Detail, wie die Schwenkstellung dabei durch einen Sicherungszapfen 62 fixiert wird, der federbelastet in einer abgeschrägten Führungshülse 63 geführt ist und jeweils an den Scharnierhülsen 60 der Zusatzelemente 53 und 54 befestigt ist. Der Sicherungszapfen 62 weist an einem Ende einen Ver-/ Entriegelungshebel 64 auf und am anderen Ende ein Verriegelungsdorn 65, der im verriegelten Zustand durch eine entsprechende Bohrung in der Hülse 60 in eine entsprechend angebrachte Bohrung in der Geländereinrichtung 52 hineinragt. Zum Entriegeln wird der Sicherungszapfen 62 an seinem Ver-/Entriegelungshebel 64 verschwenkt, der dabei an der schrägen Führungsfläche 66 der Führungshülse 63 entlang gleitet und so den Verriegelungsdorn 65 axial aus den in der Hülse 60 bzw. der Geländereinrichtung 52 eingebrachten Bohrungen herauszieht, so daß die Zusatzelemente 53 und 54 jeweils im gewünschten Schwenkbereich verschwenkbar sind. Zum Verriegeln wird der Ver-/Entriegelungshebel 64 zurückgedreht, so daß dann der Verriegelungsdorn 65 federbelastet in die Bohrung in der Geländereinrichtung 52 einrastet, sobald die Zusatzelemente 53, 54 entsprechend verschwenkt sind.

Die Geländereinrichtung 52 wird mit einem entsprechenden Mechanismus 66 in ausgeklappter bzw. eingeklappter Stellung fixiert. Bei einer anderen Ausführung ist zum Sichern der Geländereinrichtung 52 der im Zusammenhang mit Fig. 8 beschriebene Mechanismus ausgeführt.

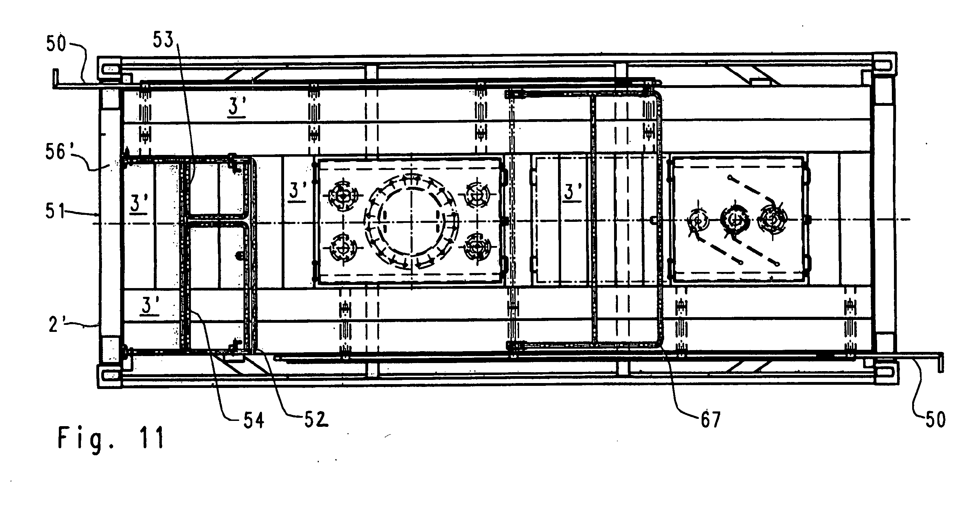

Weiterhin zeigt die Fig. 11 einen zusätzlichen Sperrbügel 67, der den Arbeitsbereich 1 in aufgestellter Stellung teilt. Diese Anordnung ist dann sinnvoll, wenn bestimmte Arbeiten nur in einem Arbeitsbereichsabschnitt durchgeführt werden sollen und der andere Arbeitsbereichsabschnitt, z.B. zur Vermeidung von Fehlbedienungen nicht, zugänglich sein soll.

Die oben beschriebenen Geländereinrichtungen erlauben eine umfassende, variable und stabile Sicherung eines Arbeitsbereiches 1, 1', insbesondere von Tankcontainern 2, 2'.

Weitere Ausführungen und Varianten ergeben sich im Rahmen der anhängenden Ansprüche.

## Patentansprüche

1. Geländereinrichtung (4, 4a; 34, 34a; 52) an einem Transportgerät (2, 2'), insbesondere an einem Tankcontainer, zum Sichern eines Arbeitsbereichs (1, 1') des Transportgeräts, wobei die Geländereinrichtung (4, 4a; 34, 34a; 52) ein klappbares Seitenteil (5, 6, 7; 34, 34a; 52) aufweist, welches zwischen einer eingeklappten Stellung und einer ausgeklappten Stellung, in welcher es einen ersten Geländerabschnitt an einer Seite des Arbeitsbereiches bildet, bewegbar ist und das klappbare Seitenteil (5, 6, 7; 34, 34a; 52) an seinem einen Ende ein Zusatzelement (15, 15a; 39; 53) aufweist,
**dadurch gekennzeichnet,**
**dass** das Zusatzelement (15, 15a; 39; 53) relativ zum Seitenteil (5, 6, 7; 34, 34a; 52) klappbar ausgebildet und angeordnet ist und in ausgeklappter Stellung bei ausgeklapptem Seitenteil (5, 6, 7; 34, 34a; 52) einen zweiten Geländerabschnitt an der Seite des Arbeitsbereichs (1; 1') bildet, der sich in einer Ebene an den ersten Geländerabschnitt anschließt.

2. Geländereinrichtung nach Anspruch 1, bei welcher das klappbare Seitenteil (5, 6, 7; 52) an seinem anderen Ende ein zweites Zusatzelement (20; 54) aufweist, welches bei ausgeklapptem ersten Seitenteil (5, 6, 7; 52) einen weiteren Geländerabschnitt an einer Seite des Arbeitsbereiches (1, 1') bildet.

3. Geländereinrichtung nach Anspruch 1 oder 2, bei welcher ein Zusatzelement (20; 54) so ausgebildet ist, daß es bei ausgeklapptem Seitenteil (5, 6, 7; 52) zwischen einer Stellung, in der es einen Geländerabschnitt an einer zweiten Seite des Arbeitsbereiches bildet, und einer Stellung bewegbar ist, in der es parallel zu der durch das klappbare Seitenteil (5, 6, 7; 52) definierten Ebene angeordnet ist.

4. Geländereinrichtung nach einem der vorhergehenden Ansprüche, bei welchem das klappbare Seitenteil (34, 34a; 52) bügelförmig ausgebildet ist und in bzw. auf die vom Arbeitsbereich (1, 1') definierte Ebene klappbar ausgebildet ist.

5. Geländereinrichtung nach einem der Ansprüche 1 bis 3, bei welcher das klappbare Seitenteil (5, 6, 7) als faltbare Anordnung ausgebildet ist, die ein oberes Geländerelement (6) und Stützelemente (5) aufweist, welche gelenkig miteinander verbunden sind und so ausgebildet und zueinander angeordnet sind, daß Geländerelement (6) und Stützelemente (5) in ausgeklappter Stellung weitgehend senkrecht zueinander verlaufen und in eingeklappter Stellung im wesentlichen parallel aneinanderliegend verlaufen.

6. Geländeranordnung mit mehreren Geländereinrichtungen (4, 4a; 34, 34a; 52) nach einem der vorhergehenden Ansprüche.

7. Geländeranordnung nach Anspruch 6, bei welcher wenigstens zwei Geländereinrichtungen (4, 4a; 34, 34a; 52) so ausgeführt und angeordnet sind, daß sie im ausgeklappten Zustand miteinander koppelbar sind.

8. Geländeranordnung nach einem der Ansprüche 6 und 7, bei welcher jeweils mindestens eine Geländereinrichtung (4, 4a; 34, 34a; 52) an ihrem klappbaren Seitenteil und/oder jeweils ein Zusatzelement eine Sicherung (24, 35, 62, 66) aufweisen, welche das klappbare Seitenteil (5, 6, 7; 34, 34a; 52) bzw. das klappbare Zusatzelement (15; 15a; 20; 53, 54) in seiner eingeklappten und/oder ausgeklappten Stellung lösbar fixiert.

9. Geländeranordnung nach Anspruch 8, bei welcher die Sicherung als Schnappverriegelung (24), Sicherungszapfen (62) und/oder Sicherungskulisse (35) ausgebildet ist.

10. Transportgerät mit einer Geländereinrichtung nach einem der Ansprüche 1-5, bzw. mit einer Geländeranordnung nach einem der Ansprüche 6-9.

11. Transportgerät nach Anspruch 10, wobei das Transportgerät als Tankcontainer (2, 2') ausgebildet ist.

## Claims

1. A railing device (4, 4a'; 34, 34a; 52) on a transport device (2, 2'), in particular on a tank container, for securing a workspace (1, 1') of the transport device,
wherein the railing arrangement (4, 4a; 34, 34a; 52) comprises a hinged side component (5, 6, 7; 34, 34a; 52), which can move between a folded-in position and a folded-out position, in which it forms a first railing portion at one side of the workspace, and the hinged side component (5, 6, 7; 34, 34a; 52) at its one end comprises an auxiliary element (15, 15a; 39, 53)
**characterised in that** the auxiliary element (15, 15a; 39; 53) is designed and arranged to pivot relative to the side component (5, 6, 7; 34, 34a; 52) and in the folded-out position with the side component (5, 6, 7; 34, 34a; 52) folded out it forms a second railing portion at the side of the workspace (1; 1') that is attached to the first railing portion in one plane.

2. A railing device according to Claim 1,
in which the hinged side component (5, 6, 7; 52) at its other end comprises a second auxiliary element (20; 54), which forms another railing portion at one side of the workspace (1, 1') when the first side component (5, 6, 7; 52) is folded out.

3. A railing device according to Claim 1 or 2,
in which an auxiliary element (20; 54) is designed so that, when the side component (5, 6, 7; 52) is folded out, it can move between a position in which it forms a railing portion at a second side of the workspace and a position in which it is disposed parallel to the plane defined by the hinged side component (5, 6, 7; 52).

4. A railing device according to one of the preceding Claims,
in which the hinged side component (34, 34a; 52) has a bow-shaped design and is designed to fold into or onto the plane defined by the workspace (1, 1').

5. A railing device according to one of Claims 1 to 3,
in which the hinged side component (5, 6, 7) is designed as a folding arrangement comprising an upper railing element (6) and post elements (5), which are pin-jointed to each other and designed and arranged so that in the folded-out position the railing element (6) and the post elements (5) substantially run perpendicular to each other and in the folded-in position run substantially parallel alongside each other.

6. A railing arrangement having several railing devices (4, 4a; 34, 34a; 52) according to one of the preceding Claims.

7. A railing arrangement according to Claim 6,
in which at least two railing devices (4, 4a; 34, 34a; 52) are designed and arranged so that they can be coupled to one another when they are swung open.

8. A railing arrangement according to one of Claims 6 and 7,
in which in each case at least one railing device (4, 4a; 34, 34a; 52) comprises, at its hinged side component, a locking device (24, 35, 62, 66), and/or in each case an auxiliary element comprises a locking device (24, 35, 62, 66), which locking device releasably fixes the hinged side component (5, 6, 7; 34, 34a; 52) and respectively the hinged auxiliary element (15; 15a; 20; 53; 54) in its folded-in and/or folded-out position.

9. A railing arrangement according to Claim 8,
in which the locking device is designed as a snap locking device (24), locking pin (62) and/or slotted link (35).

10. A transport device having a railing device according to one of Claims 1 to 5, and respectively having a railing arrangement according to one of Claims 6 to 9.

11. A transport device according to Claim 10,
in which the transport device is designed as a tank container (2, 2').

## Revendications

1. Dispositif de garde-corps (4, 4a ; 34, 34a ; 52) au niveau d'un appareil de transport (2, 2'), en particulier au niveau d'un conteneur-citerne, permettant de sécuriser une zone de travail (1, 1') de l'appareil de transport, dispositif de garde-corps (4, 4a ; 34, 34a ; 52) comprenant un élément latéral (5, 6, 7 ; 34, 34a ; 52) pliable, qui est déplaçable entre une position repliée et une position dépliée, dans laquelle il forme une première partie de garde-corps au niveau d'un côté de la zone de travail et l'élément latéral (5, 6, 7 ; 34, 34a ; 52) pliable comprend au niveau d'une de ses extrémités un élément supplémentaire (15, 15a ; 39 ; 53), **caractérisé en ce que** l'élément supplémentaire (15, 15a ; 39 ; 53) est agencé et réalisé de manière pliable par rapport à l'élément latéral (5, 6, 7 ; 34, 34a ; 52) et forme en position dépliée lorsque l'élément latéral (5, 6, 7 ; 34, 34a ; 52) est déplié, une deuxième partie de garde-corps du côté de la zone de travail (1 ; 1'), qui se raccorde dans un plan au niveau de la première partie de garde-corps.

2. Dispositif de garde-corps selon la revendication 1, dans le cadre duquel l'élément latéral (5, 6, 7 ; 52) pliable présente au niveau de son autre extrémité, un deuxième élément supplémentaire (20 ; 54), qui forme lorsque le premier élément latéral (5, 6, 7 ; 52) est déplié, une autre partie de garde-corps au niveau d'un côté de la zone de travail (1, 1').

3. Dispositif de garde-corps selon la revendication 1 ou 2, dans le cadre duquel un élément supplémentaire (20 ; 54) est réalisé de telle sorte que lorsque l'élément latéral (5, 6, 7 ; 52) est déplié, il peut être déplacé entre une position, dans laquelle il forme une partie de garde-corps au niveau d'un deuxième côté de la zone de travail et une position, dans laquelle il est agencé parallèlement au plan défini par l'élément latéral (5, 6, 7 ; 52) pliable.

4. Dispositif de garde-corps selon l'une quelconque des revendications précédentes, dans le cadre duquel l'élément latéral (34, 34a ; 52) pliable est réalisé en forme d'étrier et est réalisé de manière pliable dans et/ou sur le plan défini par la zone de travail (1, 1').

5. Dispositif de garde-corps selon l'une quelconque des revendications 1 à 3, dans le cadre duquel l'élément latéral (5, 6, 7) pliable est réalisé sous forme de dispositif pliant, qui présente un élément de garde-corps supérieur (6) et des éléments d'appui (5), qui sont reliés ensemble de manière articulée et sont réalisés et agencés les uns par rapport aux autres de telle sorte que l'élément de garde-corps (6) et les éléments d'appui (5) s'étendent de manière largement perpendiculaire l'un par rapport à l'autre en position dépliée et s'étendent l'un à côté de l'autre de manière essentiellement parallèle en position repliée.

6. Arrangement de garde-corps doté de plusieurs dispositifs de garde-corps (4, 4a ; 34, 34a ; 52) selon l'une quelconque des revendications précédentes.

7. Arrangement de garde-corps selon la revendication 6, dans le cadre duquel au moins deux dispositifs de garde-corps (4, 4a ; 34, 34a ; 52) sont réalisés et agencés de telle sorte qu'ils peuvent être couplés les uns avec les autres à l'état déplié.

8. Arrangement de garde-corps selon l'une quelconque des revendications 6 et 7, dans le cadre duquel respectivement au moins un dispositif de garde-corps (4, 4a ; 34, 34a ; 52) au niveau de son élément latéral pliable et/ou respectivement un élément supplémentaire présentent un dispositif de blocage (24, 35, 62, 66), qui fixe de manière amovible l'élément latéral (5, 6, 7 ; 34, 34a ; 52) pliable et/ou l'élément supplémentaire (15 ; 15a ; 20 ; 53, 54) pliable dans sa position repliée et/ou dépliée.

9. Arrangement de garde-corps selon la revendication 8, dans le cadre duquel le blocage est réalisé sous forme de verrouillage par encliquetage (24), de broche de blocage (62) et/ou de coulisse de blocage (35).

10. Appareil de transport avec un dispositif de garde-corps selon l'une quelconque des revendications 1 à 5 et/ou avec un arrangement de garde-corps selon l'une quelconque des revendications 6 à 9.

11. Appareil de transport selon la revendication 10, l'appareil de transport étant réalisé sous forme de conteneur-citerne (2, 2').
